# EUROPÄISCHE PATENTANMELDUNG

(11) **EP 3 188 198 A1**
(43) Veröffentlichungstag der Anmeldung: **05.07.2017**
(21) Anmeldenummer: 15405077.7
(22) Anmeldetag: 31.12.2015
(51) Int. Cl.: H01F 3/10, H01F 38/14

(54) **VORRICHTUNG ZUR BERÜHRUNGSLOSEN ÜBERTRAGUNG ELEKTRISCHER ENERGIE IN EIN BEWEGTES SYSTEM EINER VERSCHIEBEEINRICHTUNG**

(71) Anmelder: Schneeberger Holding AG, 4914 Roggwil (CH)
(72) Erfinder: VIX, Martin, 4853 Riken (CH)
(74) Vertreter: EGLI-EUROPEAN PATENT ATTORNEYS

(57) **Zusammenfassung**

Die vorliegende Erfindung betrifft eine Vorrichtung (1) zur berührungslosen induktiven Übertragung elektrischer Energie aus einem ersten, vorzugsweise stationären System' einer Verschiebeeinrichtung in ein dazu bewegbares zweites System der Verschiebeeinrichtung, mit einem magnetischen Kreis aus einem dem ersten System zugordneten Primärkern (10), auf dem eine Primärspule aufgewickelt ist, und einem dem zweiten System zugeordneten Sekundärkern (20), auf dem eine Sekundärspule aufgewickelt ist. Der Sekundärkern (20) ist relativ zum Primärkern (10) entlang eines Verschiebeweges (X), der vorzugsweise parallel zu einem Verschiebeweg der Verschiebeeinrichtung verläuft, verschiebbar angeordnet. Der Primärkern (10) erstreckt sich wenigstens über die gesamte Länge (L) des Verschiebeweges. Gemäss der Erfindung ist es vorgesehen, dass der Primärkern (10) ausschliesslich ein magnetisch leitendes Material oder ausschliesslich magnetisch leitende Materialen umfasst. Die Erfindung betrifft ferner eine Verschiebeeinrichtung, insbesondere eine Linear-Verschiebeeinrichtung, mit einer solchen Energieübertragungsvorrichtung (1) sowie ein Verfahren zum Betreiben einer derartigen Vorrichtung (1).

## Beschreibung

Die vorliegende Erfindung betrifft eine Vorrichtung zur berührungslosen, induktiven Übertragung elektrischer Energie aus einem ersten, vorzugsweise stationären System einer Verschiebeeinrichtung in ein dazu bewegbares zweites System der Verschiebeeinrichtung. Ferner betrifft die Erfindung eine (Linear-)Verschiebeeinrichtung mit einer solchen Energieübertragungsvorrichtung sowie ein Verfahren zum Betreiben der Energieübertragungsvorrichtung.

Verschiebeeinrichtungen, insbesondere ein- oder mehrdimensionale bzw. ein- oder mehrachsige Linear-Verschiebeeinrichtungen, etwa sogenannte X- oder XY-Verschiebetische, bestehen in der Regel aus einem bzw. mehreren einachsigen (Linear-) Führungssystemen, die das mitunter hochpräzise Bewegen und Positionieren eines Objektes in einer oder mehreren Richtungen ermöglichen. Eine sehr einfache Variante einer eindimensionalen bzw. einachsigen Verschiebeeinrichtung besteht beispielsweise aus einer Führungsschiene, auf der ein Führungswagen längs verschieblich geführt ist. Dabei bildet die Führungsschiene das sogenannte stationäre System der Verschiebereinrichtung, während der längsverschiebbar angeordnete Führungswagen das relativ zum ersten System bewegbare zweite System darstellt. Auf dem Führungswagen, d.h. im bewegbaren zweiten System, können diverse Einrichtungen, beispielsweise Messsysteme, Antriebseinrichtungen, Steuerungs- und Regelungseinrichtung etc. angeordnet sein, die mit elektrischer Energie versorgt werden müssen. Hierzu werden traditionell kabelgebundene Energieübertragungsvorrichtungen eingesetzt, bei denen etwa ein flexibler Kabelbaum eine Energiequelle in dem stationären ersten System mit einem Energieverbraucher im bewegbaren zweiten System verbindet. Die flexible Ausgestaltung des Kabelbaums erlaubt es dabei, der Relativbewegung des bewegbaren zweiten Systems zu folgen. Häufig wird ein derartiger Kabelbaum jedoch als nachteilig empfunden, weil er beispielsweise bei hochpräzisen Positionieranwendungen, etwa im Bereich der Halbleitertechnologie, mechanische Störungen, beispielsweise Vibrationen, aus dem stationären System in das präzise zu positionierende zweite System übertragen kann.

Zur Vermeidung dieser Problematik werden im Stand der Technik diverse kabellose bzw. sogenannte berührungslose Energieübertragungsvorrichtungen vorgeschlagen, bei denen die elektrische Energie mitunter induktiv nach dem Transformatorprinzip übertragen wird. Eine derartige Vorrichtung ist beispielsweise aus der japanischen Druckschrift JP 6 204 043 A bekannt, die ein lineares Verschiebesystem zur kontaktlosen Energieübertragung beschreibt. Das System besteht aus einem Primärkern und einem Sekundärkern, die jeweils E-förmig ausgebildet und einander gegenüberliegend angeordnet sind, wobei der Sekundärkern gegenüber dem Primärkern entlang einer Längsachse des Primärkerns verschiebbar ist. Zum Zwecke der Energieübertragung sind auf beiden E-Kernen jeweils um deren Mittelstege Primär- bzw. Sekundärwicklungen aufgebracht. Um einen Anstieg der Selbstinduktion innerhalb der Primärspule zu vermeiden, ist der Primärkern entlang seiner Längsachse periodisch segmentiert, indem zwischen magnetisch leitenden Kernabschnitten jeweils Füllsegmente aus einem nicht-magnetischen und nicht-leitenden Material eingebracht sind. Um die gewünschte Reduzierung der Selbstinduktion zu erreichen, muss die Länge des Sekundärkerns in Längsrichtung des Verschiebeweges zwingend einem ganzzahligen Vielfachen der Summe aus den Längen eines Füllsegments und eines magnetisch leitenden Kernabschnitts entsprechen.

Aufgrund des segmentierten Aufbaus des Primärkerns ist die Vorrichtung insgesamt jedoch hinsichtlich der übertragbaren Energie begrenzt. Zudem erhöht die erforderliche Mindestlänge des Sekundärkerns entlang der Verschieberichtung die bewegte Gesamtmasse des zweiten Systems, was sich wiederum nachteilig auf die Dynamik des Verschiebesystems auswirken kann.

Aufgabe der vorliegenden Erfindung ist es daher, eine Vorrichtung zur berührungslosen induktiven Energieübertragung für Verschiebeeinrichtungen bereitzustellen, die gegenüber den aus dem Stand der Technik bekannten Vorrichtungen eine deutlich bessere Energieübertragungseffizienz aufweist, und vorzugsweise auch zu einer Verbesserung der dynamischen Eigenschaften der Verschiebeeinrichtung beiträgt.

Diese Aufgabe wird durch eine Energieübertragungsvorrichtung gemäss Anspruch 1, eine Verschiebeeinrichtung gemäss Anspruch 11 sowie ein Verfahren gemäss Anspruch 13 gelöst. Vorteilhafte Ausführungen der Erfindung sind Gegenstand der abhängigen Ansprüche.

Die erfindungsgemässe Vorrichtung zur berührungslosen induktive Übertragung elektrischer Energie weist einen magnetischen Kreis auf, der einerseits einem dem ersten, vorzugsweise stationären System der Verschiebeeinrichtung zugeordneten Primärkern und andererseits einem dem zweiten System (relativ bewegbar zum ersten System) zugeordneten Sekundärkern umfasst, wobei auf dem Primärkern bzw. auf dem Sekundärkern eine Primärspule bzw. eine Sekundärspule aufgewickelt ist. Der Sekundärkern ist samt Sekundärspule entlang eines Verschiebeweges, der vorzugsweise parallel zu einem Verschiebeweg der Verschiebeeinrichtung verläuft, relativ zum Primärkern samt Primärspule verschiebbar angeordnet, wobei sich der Primärkern wenigstens über die gesamte Länge des Verschiebeweges des Sekundärkerns erstreckt.

Die vorliegende Erfindung zeichnet sich dadurch aus, dass der Primärkern ausschliesslich ein magnetisch leitendes Material oder ausschliesslich magnetisch leitende Materialien umfasst; dies im Unterschied zum Stand der Technik, wo der Primärkern segmentiert ist und von Füllelementen aus nicht-magnetisch leitendem Material unterbrochen ist.

In erfindungsgemässer Weise wurde erkannt, dass bei der aus dem Stand der Technik bekannten Vorrichtung ein sehr grosser Teil des Sekundärkern-Volumens, entsprechend der Ausdehnung der nicht-magnetischen Füllsegment entlang der Verschieberichtung, für die Ausbildung des magnetischen Kreises zwischen Primär- und Sekundärseite effektiv ungenutzt bleibt. Hierdurch reduziert sich insgesamt in nachteiliger Weise die magnetische Kopplung zwischen Primär- und Sekundärseite und damit das Energieübertragungsvermögen. Zum anderen wird durch den ungenutzten Teil des Sekundärkern-Volumens die bewegte Masse in unnötiger Weise erhöht, was sich wiederum nachteilig auf die Dynamik des Verschiebesystems auswirken kann.

Im Weiteren wurde erkannt, dass auf die Minimierung der Selbstinduktion im Primärkern - wie im Stand der Technik als essentiell erachtet - zugunsten einer grösseren magnetischen Kopplung zwischen Primär- und Sekundärseite verzichtet werden kann, um eine wesentlich grössere elektrische Leistung induktiv übertragen zu können. Dadurch, dass der Primärkern gemäss der vorliegenden Erfindung ausschliesslich ein magnetisch leitendes Material bzw. ausschliesslich magnetisch leitende Materialien umfasst, also auf nicht-magnetische Füllsegmente gänzlich verzichtet wird, ist die vom magnetischen Fluss des Magnetkreises zwischen Primär- und Sekundärseite durchdrungene Querschnittsfläche im Vergleich zum Stand der Technik wenigstens doppelt so gross und damit die magnetische Kopplung und übertragbare Leistung ebenso.

Dabei muss der Primärkern nicht notwendigerweise aus einem homogenen bzw. einstückigen magnetisch-leitenden Körper bestehen, sondern kann auch beispielsweise aus mehreren, insbesondere 2, 3, 4, 5, 6, 7, 8, 9, 10 Segmenten aus jeweils einem oder mehreren magnetisch-leitenden Materialien bestehen, die etwa in Längserstreckung des Primärkerns aneinandergereiht und in unmittelbarem Kontakt miteinander angeordnet sind. Denkbar ist etwa, dass der Primärkern aus mehreren beispielsweise 20 mm langen Ferritsegmenten zusammengesetzt ist.

Selbstverständlich ist es ebenfalls von Vorteil, wenn auch der Sekundärkern ausschliesslich ein magnetisch leitendes Material oder ausschliesslich magnetisch leitende Materialien umfasst. Zudem kann der Sekundärkern ebenfalls aus einem homogenen bzw. einstückigen magnetisch-leitenden Körper bestehen oder aus mehreren Segmenten zusammengesetzt sein. Insoweit können oben beschriebene vorteilhafte Ausgestaltungen des Primärkerns in analoger Weise auch beim Sekundärkern Anwendung finden.

Gemäss einer weiteren vorteilhaften Ausgestaltung der Erfindung kann es vorgesehen sein, dass die Längserstreckung des Sekundärkerns in Richtung des Verschiebeweges im Vergleich zum Stand der Technik reduziert werden kann, um ansonsten wenigstens die gleiche elektrische Leistung vom ersten System in das zweite System übertragen zu können. Hierdurch reduziert sich in vorteilhafter Weise die bewegte Masse des zweiten Systems, was insgesamt zu einer Verbesserung der dynamischen Eigenschaften der Verschiebeeinrichtung beiträgt. So ist es denkbar, dass die Längserstreckung des Sekundärkerns in Richtung des Verschiebeweges kleiner gleich 80 mm, insbesondere kleiner gleich 40 mm, bevorzugt kleiner gleich 20 mm ist.

In jedem Fall ist aber gemäss der vorliegenden Erfindung die Längserstreckung des Sekundärkerns in Richtung des Verschiebeweges stets kürzer als die entsprechende Längserstreckung des Primärkerns, der sich - wie oben beschrieben - wenigstens über die gesamte Länge des Verschiebeweges des Sekundärkerns erstreckt.

Nach einer weiteren vorteilhaften Ausgestaltung der Erfindung kann sich der Primärkern wenigstens über die gesamte Länge des Verschiebeweges des Sekundärkerns zuzüglich wenigstens der Längserstreckung des Sekundärkerns in Richtung des Verschiebeweges des Sekundärkerns erstrecken. Damit ist gewährleistet, dass über die gesamte Länge des Verschiebeweges des Sekundärkerns die gleiche magnetische Kopplung und damit die gleiche Energieübertragungseffizienz erreicht werden kann. Von Vorteil ist der Primärkern wenigstens so lang ausgebildet und relativ zum Verschiebeweg des Sekundärkerns so angeordnet, dass der Primärkern jeweils an beiden Enden des Verschiebeweges des Sekundärkerns wenigstens um das halbe Mass, bevorzugt um das gesamte Mass der Längserstreckung des Sekundärkerns übersteht.

Um die Verschiebbarkeit des Sekundärkerns gegenüber dem Primärkern entlang des Verschiebeweges zu realisieren, sind der Primärkern und der Sekundärkern einander gegenüberliegend und über einen Luftspalt voneinander beabstandet angeordnet. Dabei kann es in vorteilhafter Weise vorgesehen sein, dass der Luftspalt insbesondere über die gesamte Länge des Verschiebeweges vorzugsweise kleiner gleich 1 mm, kleiner gleich 0,5 mm, kleiner gleich 0,2 mm, kleiner gleich 0,15 mm oder besonders bevorzugt kleiner gleich 0,1 mm ist. Insbesondere ist es von Vorteil, wenn der Luftspalt über die gesamte Länge des Verschiebeweges konstant bleibt.

Um mitunter den Luftspalt konstant über die gesamte Länge des Verschiebeweges mit hoher Präzision aufrecht erhalten zu können, kann es nach einer weiteren vorteilhaften Ausgestaltung der Erfindung vorgesehen sein, dass die Energieübertragungsvorrichtung eine Führungseinrichtung zur Führung des Sekundärkerns relativ zum Primärkern entlang des Verschiebeweges aufweist. So kann der Sekundärkern beispielsweise direkt an dem bewegbaren zweiten System der Verschiebeeinrichtung angeordnet sein und von diesem bzw. dem Führungssystem der Verschiebeeinrichtung mitgeführt werden. Alternativ oder zusätzlich ist aber auch denkbar, dass der Sekundärkern über eine separate Führungseinrichtung, beispielsweise eine Linearführung verfügt, mit der er längs des Verschiebeweges relativ zum Primärkern verschiebbar geführt wird.

Nach einer weiteren vorteilhaften Ausgestaltung der Erfindung sind der Primärkern und der Sekundärkern als sich gegenüber liegende E-Kerne mit quer zum Verschiebeweg des Sekundärkerns E-förmigen Querschnitten ausgebildet. Vorzugsweise ist die Primärspule bzw. die Sekundärspule dabei um den jeweiligen Mittelschenkel des E-Kerns aufgewickelt. Denkbar sind selbstverständlich aber auch andere Querschnittsprofile des Primärkerns bzw. des Sekundärkerns, beispielsweise sogenannte U-Kerne, C-Kerne, ER-Kerne oder EFD-Kerne.

Die magnetische Kopplung und damit die Energie- bzw. Leistungsübertragungseffizienz kann weiterhin gesteigert werden, wenn die Ausdehnung des Mittelschenkels des E-Kerns des Primär- bzw. Sekundärkerns längs der Basis des E-Kerns wenigstens eineinhalb, vorzugsweise wenigstens doppelt so gross ist wie die entsprechende Ausdehnung der beiden Seitenschenkel des E-Kerns. Denn hierdurch erhöht sich die vom magnetischen Fluss durchdrungene Querschnittsfläche und dadurch wiederum die magnetische Kopplung zwischen Primär- und Sekundärseite.

Besonders bevorzugt umfassen der Primärkern und/oder der Sekundärkern ein ferromagnetisches Material, insbesondere Eisen, oder ein ferrimagnetisches Material, insbesondere ein Ferrit, beispielsweise N87.

Die Primärspule und/oder die Sekundärspule können so ausgelegt sein, dass sie wenigstens 5 Windungen, insbesondere wenigstens 7 Windungen, vorzugsweise 10 Windungen aufweisen. Für die Windungen kommt insbesondere Kupferdraht in Betracht, beispielsweise ein Kupferdraht mit einem Querschnitt von 2 mm.

Im Weiteren können die Primärspule und/oder die Sekundärspule derart ausgelegt sein, dass sie mit einem Wechselstrom von bis zu 50 A betreibbar sind. Ebenso können Primärspule und Sekundärspule im Weiteren derart ausgebildet sein, dass sie mit einer Wechselstrom-/Wechselspannungs-Frequenz zwischen 100 kHz und 500 kHz, insbesondere zwischen 200 kHz und 400 kHz, betreibbar sind.

Entsprechend sieht ein weiterer Aspekt der vorliegenden Erfindung ein Verfahren zum Betreiben einer erfindungsgemässen Energieübertragungsvorrichtung vor, bei der die Primärspule mit einem Wechselstrom von bis zu 50 A betrieben wird. Weiterhin kann es bei dem Verfahren vorgesehen sein, dass Primärspule mit einer Wechselstrom-/Wechselspannungs-Frequenz im Bereich zwischen 100 kHz und 500 kHz insbesondere zwischen 200 kHz und 500 kHz, betrieben wird. Insbesondere bei derartig hohen Frequenzen (etwa ab einigen kHz) bestehen der Primärkern und der Sekundärkern zweckmäßigerweise aus Ferrit.

Ein noch weiterer Aspekt der vorliegenden Erfindung betrifft eine Verschiebeeinrichtung, insbesondere eine Linearverschiebeeinrichtung, mit wenigstens einer erfindungsgemässen Vorrichtung zur berührungslosen, induktiven Übertragung elektrischer Energie aus einem stationären ersten System der Verschiebeeinrichtung in ein dazu bewegbares zweites System.

Denkbar ist beispielsweise, dass die Verschiebeeinrichtung eine ein- oder mehrdimensionale bzw. eine ein- oder mehrachsige, mitunter linear geführte Verschiebeeinrichtung ist, beispielsweise ein XY-Verschiebetisch oder ein XYZ-Verschiebetisch. Bei mehrdimensionalen bzw. mehrachsigen Verschiebeeinrichtungen ist dann vorzugsweise für jede Achse eine erfindungsgemässe Energieübertragungsvorrichtung vorgesehen, um elektrische Energie etwa aus einem stationären Laborsystem stufenweise zwischen den sich relativ zueinander bewegenden Achsstufen zu übertragen. Um etwa bei einem XY-Kreuztisch einen elektrischen Verbraucher auf der obersten Y-Achsstufe mit elektrischer Energie zu versorgen, kann es vorgesehen sein, dass eine erste erfindungsgemässe Energieübertragungsvorrichtung elektrische Energie zwischen dem relativ zu einem Laborsystem stationären System der X-Achse in das bewegte System der X-Achse übertragt. Das bewegte System der X-Achse entspricht wiederum dem dazu stationären System der Y-Achse, aus dem die elektrische im Weiteren über eine zweite erfindungsgemässe Energieübertragungsvorrichtung in das bewegte System der Y-Achse übertragbar ist. Dabei kann die Energieübertragung innerhalb des bewegten Systems der X-Achse bzw. innerhalb des dazu stationären Systems der Y-Achse von der Sekundärseite/- spule der ersten Energieübertragungsvorrichtung zur Primärseite/-Spule der zweiten Energieübertragungsvorrichtung über einen elektrischen Leiter, etwa kabelgebunden erfolgen.

Weitere Einzelheiten der Erfindung und insbesondere eine beispielhafte Ausführungsform der vorgeschlagenen Vorrichtung werden im Folgenden anhand der beigefügten Zeichnung erläutert.

Es zeigen:
- Fig. 1: eine schematische Darstellung eines Ausführüngsbeispiels der erfindungsgemässen Energieübertragungs-vorrichtung (ohne Primär- und Sekundärspule) in einer perspektivischen Ansicht, und
- Fig. 2: einen Querschnitt durch die Energieübertragungsvorrichtung gemäss Fig. 1.

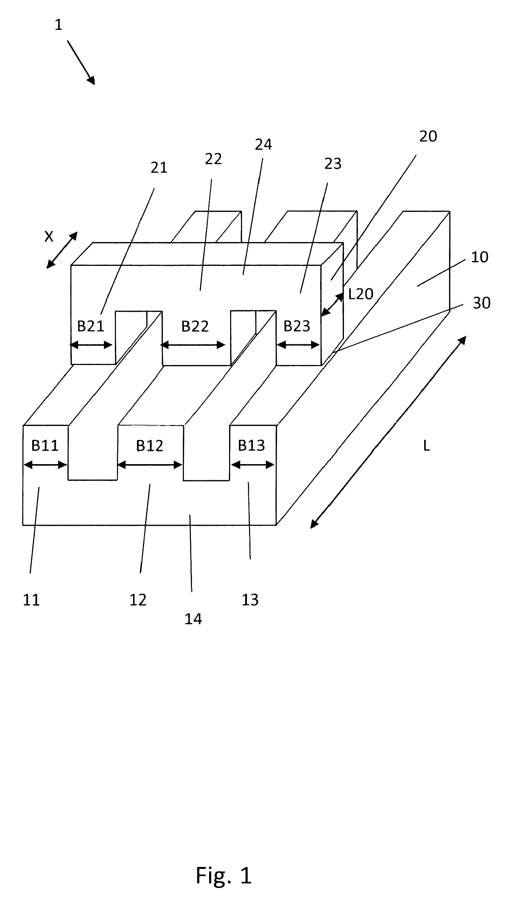

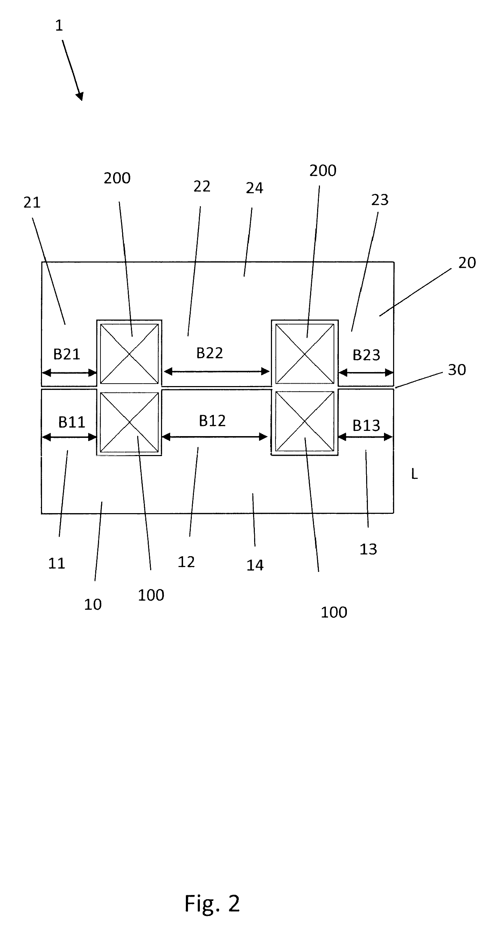

Die Fig. 1 und 2 zeigen ein mögliches Ausführungsbeispiel einer erfindungsgemässen Energieübertragungsvorrichtung 1, die dazu ausgebildet ist, um elektrische Energie induktiv aus einem ersten, vorzugsweise stationären System einer Verschiebeeinrichtung (hier nicht dargestellt) in ein dazu bewegtes zweites System der Verschiebereinrichtung berührungslos bzw. kabellos zu übertragen. Das vorliegende Ausführungsbeispiel zeigt eine lineare geführte Energieübertragungsvorrichtung 1, im Speziellen dazu ausgebildet ist, elektrische Energie aus dem stationären in das bewegte System eine Linearführungseinrichtung zu übertragen.

Wie den Fig. 1 und 2 zu entnehmen ist, besteht die hier gezeigte Energieübertragungsvorrichtung 1 aus einem stationären Teil und einen beweglichen Teil, nämlich aus einem zum ersten System der Linearführungseinrichtung stationären Primärkern 10 und einem relativ dazu bewegbaren, dem zweiten System der Linearführungseinrichtung zugeordneten Sekundärkern 20. Konkret ist der Sekundärkern 20 im vorliegenden Ausführungsbeispiel parallel zum zweiten System der Linearführungseinrichtung entlang eines Verschiebeweges X bewegbar. Insbesondere kann er direkt an dem zweiten System, etwa einem Verschiebetisch (hier nicht gezeigt) der Linearführungseinrichtung angeordnet sein, so dass er von dem Verschiebetisch der Linearführungseinrichtung entlang deren Verschiebeachse mitgeführt wird.

Denkbar ist aber auch, dass der Sekundärkern 20 mit einer separaten Führungseinrichtung (hier nicht gezeigt) relativ zum Primärkern 10 entlang dessen Längsachse verschoben werden kann. Hierzu kann es insbesondere vorgesehen sein, dass die separate Führungseinrichtung für den Sekundärkern eine eigene Antriebseinrichtung aufweist. Denkbar ist auch, dass der Sekundärkern 20 relativ zum Primärkern 10 nicht notwendigerweise parallel zu einem Verschiebeweg der Linearführungseinrichtung bewegbar ist. Insoweit kann der Verschiebeweg des Sekundärkerns 20 grundsätzlich gegenüber einem Verschiebeweg der Verschiebeeinrichtung bzw. Linearführungseinrichtung bezüglich Verlauf und/oder Lage abweichen. Der Verlauf des Verschiebeweges X des Sekundärkerns 20 korrespondiert jedoch stets im Wesentlichen mit dem Verlauf der Längsachse des Primärkerns 10. Bevorzugt verläuft der Verschiebeweg X des Sekundärkerns 20 jedoch parallel zum Verschiebeweg der Verschiebeeinrichtung bzw. Linearführungseinrichtung.

Auf dem Primärkern 10 ist eine Primärspule 100 (in Fig. 1 nicht gezeigt) und auf dem Sekundärkern 20 eine Sekundärspule 200 aufgewickelt. Sowohl die Primärspule 100 als auch die Sekundärspule 200 sind durch das auf Wickeln auf den Primärkern 10 bzw. den Sekundärkern 20 mit ihrem jeweiligen Kern fest verbunden. D.h. die Primärspule 100 bzw. Sekundärspule 200 bewegen sich relativ zu ihrem jeweiligen Kern nicht.

Wie den Fig. 1 und 2 ferner zu entnehmen ist, sind der Primärkern 10 und der Sekundärkern 20 im vorliegenden Ausführungsbeispiel jeweils als sogenannte E-Kerne ausgebildet, die quer zum Verschiebeweg X des Sekundärkerns 20 E-förmige Querschnitte aufweisen. Soweit weisses E-Profil von Primärkern 10 und Sekundärkern 20 jeweils eine Basis 14, 24, einen Mittelschenkel 12, 22 sowie je 2 Seitenschenkel 11, 13; 21, 23. Wie in den Fig. 1 und 2 gezeigt, sind der Primärkern 10 und der Sekundärkern 20 jeweils mit den offenen Seiten des E-Profils einander zugewandt angeordnet (d.h. die Basen 14, 24 der beiden E-Kerne sind einander abgewandt), so dass die jeweils korrespondierenden Seitenschenkel 11, 21 bzw. 13, 21 sowie die Mittelschenkel 12, 22 des Primär- und Sekundärkerns 10, 20 einander deckungsgleich gegenüberliegen.

Wie insbesondere in Fig. 2 zu erkennen ist, sind die Primärspule 100 und die Sekundärspule 200 jeweils um den Mittelschenkel 12, 22 des Primärkerns 10 bzw. Sekundärkerns 20 gewickelt, so dass die Windungen der beiden Spulen jeweils in den Längsvertiefungen zwischen den Seitenschenkeln 11, 13; 21, 23 und den Mittelschenkeln 12, 22 verlaufen und jeweils stirnseitig an den Enden des Primärkerns 10 bzw. des Sekundärkerns 20 (in die jeweils andere Längsvertiefung auf der gegenüberliegenden Seite des Mittelschenkels) "umkehren".

Vorzugsweise bestehen die Wicklungen der Primärspule 100 und der Sekundärspule 200 aus Kupferdraht, beispielsweise aus einem Kupferdraht von etwa 2 mm Durchmesser. Bevorzugt sind die Primärspule 100 und die Sekundärspule 200 derart ausgelegt, dass sie mit einem Strom von bis zu 50 A betrieben werden können. Vorzugsweise weist die Primärspule 10 und/oder die Sekundärspule 20 wenigstens 5 Windungen, insbesondere wenigstens 7 Windungen, vorzugsweise jedoch 5 Windungen auf, um ein ausreichend hohes Magnetfeld erzeugen zu können.

Um elektrische Energie über den gesamten Verschiebeweg der Verschiebeeinrichtung bzw. der Linearführungseinrichtung in das bewegte, zweite System übertragen zu können, erstreckt sich der Primärkern 10 wenigstens über die gesamte Länge L des Verschiebeweges X des Sekundärkerns 20. Bevorzugt erstreckt sich jedoch der Primärkern wenigstens über die gesamte Länge L des Verschiebeweges X zuzüglich der Längserstreckung L20 des Sekundärkerns 20 in Richtung des Verschiebeweges X. Wie aus Fig. 1 ersichtlich ist, ist damit die Längserstreckung des Primärkerns 10 stets grösser in aller Regel wesentlich grösser als die Längserstreckung L20 des Sekundärkerns 20. Entsprechend ist auch die Primärspule 100 gegenüber der Sekundärspule 200 deutlich länger bzw. in die Länge gezogen ausgebildet, da sich die Wicklungen der Primärspule 100 über die gesamte Länge des Primärkerns 10 erstrecken.

Um die bewegte Masse der Energieübertragungsvorrichtung 1 möglichst gering zu halten, ist die Längserstreckung L20 des Sekundärkerns 20 in Richtung des Verschiebeweges X kleiner gleich 80 mm, insbesondere kleiner gleich 40 mm, besonders bevorzugt kleiner gleich 20 mm. Zum Vergleich beträgt die Breite des Primärkerns 10 bzw. des Sekundärkerns 20, d.h. die Ausdehnung beider Kerne quer/senkrecht zum Verschiebeweg X, im vorliegenden Ausführungsbeispiel etwa 65 mm.

Erfindungswesentlich ist, dass der Primärkern 10 ausschliesslich ein magnetisch leitendes Material oder ausschliesslich magnetisch leitende Materialien umfasst, diesen Gegensatz zum Stand der Technik, wurde Primärkern von Nicht-magnetischen Füllsegmenten periodisch unterbrochen ist. Selbstverständlich besteht auch der Sekundärkern 20 vorzugsweise ausschliesslich aus magnetisch leitenden Material bzw. ausschliesslich aus magnetisch leitenden Materialien. Im Weiteren kann es vorgesehen sein, dass der Primärkern 10 und/oder der Sekundärkern 20 entweder einstückig ausgebildet oder aus mehreren Teilsegmenten aufgebaut ist, die in unmittelbarem Kontakt miteinander stehen.

Besonders bevorzugt umfasste der Primärkern 10 und/oder der Sekundärkern 20 an ferromagnetischen Material, insbesondere Eisen, oder ein ferrimagnetisches Material auf, insbesondere ein Ferrit, beispielsweise N87.

Um die magnetische Kopplung zwischen Primär- und Sekundärseite der Energieübertragungsvorrichtung 1, d.h. zwischen dem Primärkern 10 und dem Sekundärkern 20 zu erhöhen, ist es bei der Energieübertragungsvorrichtung 1 gemäss dem vorliegenden Ausführungsbeispiel vorgesehen, dass die Ausdehnung (Breite) B12, B22 des Mittelschenkels 12, 22 des E-förmigen Primär- bzw. Sekundärkerns 10, 20 längs der jeweiligen Basis 14, 24 des E-Kerns wenigstens doppelt so gross ist wie die entsprechende Ausdehnung (Breite) B11, B13; B21, B23 der beiden Seitenschenkel 11, 13; 21, 23 des jeweiligen E-Kerns.

Aufgrund der Verschiebbarkeit des Sekundärkerns 20 gegenüber dem Primärkern 10 ist notwendigerweise ein Luftspalt 30 zwischen beiden Kernen 10, 20 vorgesehen. Um dennoch die magnetische Kopplung ausreichend gross zu halten, ist es bei der Energieübertragungsvorrichtung 1 gemäss dem vorliegenden Ausführungsbeispiel vorgesehen, dass der Luftspalt 30 über die gesamte Länge L des Verschiebewegs X vorzugsweise kleiner als 0,5 mm, besonders bevorzugt etwa 0,1 mm ist. Um diesen Luftspalt konstant aufrecht zu halten, ist der Sekundärkern 20 bevorzugt möglichst stabil entlang des gesamten Verschiebeweges X geführt. Es versteht sich von selbst, dass die sich gegenüberliegenden Oberflächen von Primärkern 10 Sekundärkern 20 entsprechend eben ausgebildet sind, um einen Luftspalt 30 in der oben diskutierten Grössenordnung konstant über den gesamten Verschiebeweg X aufrecht erhalten zu können.

Die gesamte Energieübertragungsvorrichtung 1, insbesondere die Primärspule 100 und/oder die Sekundärspule 200, ist ferner derart ausgebildet, dass sie mit einer Wechselstrom-/Wechselspannungs-Frequenz im Bereich zwischen 100 kHz und 500 kHz, insbesondere zwischen 200kHz und 450 kHz, betreibbar ist.

## Patentansprüche

1. Vorrichtung (1) zur berührungslosen induktiven Übertragung elektrischer Energie aus einem ersten, vorzugsweise stationären System einer Verschiebeeinrichtung in ein dazu bewegbares zweites System der Verschiebeeinrichtung, mit einem magnetischen Kreis aus einem dem ersten System zugordneten Primärkern (10), auf dem eine Primärspule (100) aufgewickelt ist, und einem dem zweiten System zugeordneten Sekundärkern (20), auf dem eine Sekundärspule (200) aufgewickelt ist, wobei der Sekundärkern (20) relativ zum Primärkern (10) entlang eines Verschiebeweges (X), der vorzugsweise parallel zu einem Verschiebeweg der Verschiebeeinrichtung verläuft, verschiebbar angeordnet ist und wobei sich der Primärkern (10) wenigstens über die gesamte Länge (L) des Verschiebeweges erstreckt, **dadurch gekennzeichnet, dass** der Primärkern (10) ausschliesslich ein magnetisch leitendes Material oder ausschliesslich magnetisch leitende Materialen umfasst.

2. Vorrichtung (1) nach Anspruch 1, **dadurch gekennzeichnet, dass** die Längserstreckung (L20) des Sekundärkerns (20) in Richtung des Verschiebewegs (X) kleiner gleich 80 mm, kleiner gleich als 40 mm oder kleiner gleich 20 mm ist.

3. Vorrichtung (1) nach Anspruch 1 oder 2, **dadurch gekennzeichnet, dass** sich der Primärkern (10) wenigstens über die gesamte Länge (L) des Verschiebeweges (X) zuzüglich der Längserstreckung (L20) des Sekundärkerns (20) in Richtung des Verschiebewegs (X) erstreckt.

4. Vorrichtung (1) nach einem der vorhergehenden Ansprüche, **dadurch gekennzeichnet, dass** der Primärkern (10) und der Sekundärkern (20) einander gegenüberliegend und über einen Luftspalt (30) voneinander beabstandet angeordnet sind, wobei der Luftspalt (30) insbesondere über die gesamte Länge (L) des Verschiebewegs vorzugsweise kleiner gleich 1 mm, kleiner gleich 0,5 mm, kleiner gleich 0,2 mm, kleiner gleich 0,15 mm oder kleiner gleich 0,1 mm ist.

5. Vorrichtung (1) nach einem der vorhergehenden Ansprüche, **dadurch gekennzeichnet, dass** der Primärkern (10) und der Sekundärkern (20) als sich gegenüberliegende E-Kerne mit quer zum Verschiebeweg (X) des Sekundärkerns (20) E-förmigen Querschnitten ausgebildet sind, wobei die Primärspule (100) bzw. die Sekundärspule (200) vorzugsweise um den Mitteschenkel (12, 22) des jeweiligen E-Kerns aufgewickelt ist.

6. Vorrichtung (1) nach Anspruch 4, **dadurch gekennzeichnet, dass** die Ausdehnung (B12, B22) des Mittelschenkels (12, 22) des E-Kerns des Primär- bzw. Sekundärkerns (10, 20) längs der Basis (14, 24) des E-Kerns wenigstens eineinhalbmal, vorzugsweise wenigstens doppelt so gross ist wie die entsprechende Ausdehnung (B11, B13; B21, B23) der beiden Seitenschenkel (11, 13; 21, 23) des E-Kerns.

7. Vorrichtung (1) nach einem der vorhergehenden Ansprüche, **dadurch gekennzeichnet, dass** der Primärkern (10) und/oder der Sekundärkern (20) ein ferromagnetisches Material, insbesondere Eisen, oder ein ferrimagnetisches Material, insbesondere ein Ferrit, umfasst.

8. Vorrichtung (1) nach einem der vorhergehenden Ansprüche, **dadurch gekennzeichnet, dass** die Vorrichtung (1) eine Führungseinrichtung zur Führung des Sekundärkerns (20) relativ zum Primärkern (10) entlang des Verschiebeweges (X) aufweist.

9. Vorrichtung (1) nach einem der vorhergehenden Ansprüche, **dadurch gekennzeichnet, dass** die Primärspule (100) und/oder die Sekundärspule (200) wenigstens 5 Windungen, insbesondere wenigstens 7 Windungen" vorzugsweise 10 Windungen aufweist.

10. Vorrichtung (1) nach einem der vorhergehenden Ansprüche, **dadurch gekennzeichnet, dass** die Primärspule (100) und/oder die Sekundärspule (200) derart ausgelegt sind, dass sie mit einem Wechselstrom von bis 50 A und/oder mit einer Wechselstrom-/Wechselspannungs-Frequenz im Bereich zwischen 100 kHz und 500 kHz, insbesondere zwischen 200kHz und 450 kHz, betreibbar ist.

11. Verschiebeeinrichtung, insbesondere LinearVerschiebeeinrichtung, mit wenigstens einer Vorrichtung (1) zur berührungslosen, induktiven Übertragung elektrischer Energie nach einem der vorhergehenden Ansprüche, wobei die Verschiebeeinrichtung ein stationäres System und ein dazu bewegbares zweites System aufweist.

12. Verfahren zum Betreiben einer Vorrichtung (1) zur berührungslosen, induktiven Übertragung elektrischer Energie nach einem der vorhergehenden Ansprüche, **dadurch gekennzeichnet, dass** die Primärspule (100) mit einem Wechselstrom von bis 50 A betreiben wird.

13. Verfahren nach Anspruch, **dadurch gekennzeichnet, dass** die die Primärspule (100) mit einer Wechselstrom-/Wechselspannungs-Frequenz im Bereich zwischen 100 kHz und 500 kHz, insbesondere zwischen 200kHz und 450 kHz, betrieben wird.
